# EUROPEAN PATENT APPLICATION

(11) **EP 0 820 693 A1**
(43) Date of publication of application: **28.01.1998**
(21) Application number: 97202259.4
(22) Date of filing: 18.07.1997
(51) Int. Cl.: A01G 29/00

(54) **Device for dispensing a liquid**

(30) Priority: 25.07.1996 NL 1003684
(71) Applicant: H. Weterings B.V., 2691 MG 's-Gravenzande (NL)
(72) Inventor: Weterings, Ronald Johannus Maria, 3151 JC Hoek van Holland (NL)
(74) Representative: de Bruijn, Leendert C.

(57) **Abstract**

Device (1) for dispensing a liquid to a crop, which is cultivated in or on a substrate. The device (1) consists of two parts (6,7) hingeably joined to one another. A first part (6) is intended to be pushed into the substrate and is provided with guide means for liquid issuing from the outflow opening (8) of the second part (7). The outflow opening (8) is connected via a channel to a capillary line (2). The outflow opening (8) is located approximately at the hinge point (12) between the first and the second part (6,7).

## Description

The present invention relates to a device for dispensing a liquid to a crop, comprising a spike-shaped body provided with a first part, which has to be introduced into the substrate in which/on which the crop is cultivated, and a second part provided with a fixing for a feed hose for said liquid to be dispensed, wherein an outflow opening is arranged between said first and second parts and the first part is provided with means for guiding fluid issuing from said outflow opening to the substrate.

A device of this type is generally known in the prior art as a trickle irrigation spike. A spike-shaped trickle device of this type is employed on a very large scale for individual watering of plants. In this way substantial savings in water can be achieved, whilst it is ensured that the moisture to be supplied, to which nutrients or fertilisers and/or pesticides may have been added, is fed to the desired location. With this arrangement, spike-shaped trickle devices of this type are connected to a capillary line, which, in turn, is connected to a main line. When a certain pressure is maintained in the main line, the volume of liquid moving through the capillary line is accurately known. To this end, the capillary lines are standardised and calibrated.

Systems of this type are, on the one hand, assembled on the spot from separate components and, on the other hand, regularly supplied to the user on the basis of a drawing, that is to say a structure consisting of the main line, capillary line and trickle irrigation spikes, described above, is not made up in greenhouses or elsewhere using various rolls of hose as the starting materials, but the specific requirements are determined in advance and the system is assembled in the factory under optimum conditions.

With the structures known to date, the capillary hose extends as a continuation of the spike, that is to say perpendicular to the plane of the substrate in which/on which the related crop was cultivated.

This presents no problem whatsoever in the case of crops where leaves and the like are relatively high. However, if the crop is close to the ground, there is a risk of crop and capillary being confused, which, for example, can lead to undesirable consequences when pruning. Furthermore, the aim is to make the capillary lines as short as possible.

In order to avoid these problems, it is proposed in the prior art that the trickle irrigation spike described above be constructed at right angles. That is to say, the first part and the second part are perpendicular to one another.

Although a trickle spike of this type performs extremely well during operation, it has to date not found general acceptance.

The reason for this is, in particular, because when, for example, changing the crop or in the case of other re-use, where the hose system is raised, the right-angled trickle irrigation spikes become caught up in the crops or become tangled with one another. Another problem arises because in the case of structures, which are produced in the factory assemblies consisting of main line, a large number of capillary lines and an equal number of spikes, the space taken up by right-angled spikes is inadmissibly large. Moreover, the right-angled construction causes tangling of the capillary lines with one another or with the main line. Finally, it has not proved possible to attach right-angled trickle irrigation spikes of this type to the capillary lines by machine.

The aim of the present invention is to overcome this disadvantage and to provide a trickle irrigation spike which does not have these disadvantages.

This aim is achieved with a device as described above in that the first and the second parts are hingeably joined to one another and in that the outflow opening is located in the second part close to the hinge point.

By producing the first and second parts in, for example, one injection moulding treatment but located some distance from one another, it is possible to optimise the shape of each of said parts. Moreover, as a result of the hinging character, it is now possible for the spikes to be placed in the extended, i.e. straight, position on rolls and the like during production in the factory and to be transported in this way and for the angle between the first section and the second section to be set as desired in the greenhouse or other location where the spikes are to be used, without any further operation. The device described above is found to meet the requirements in a wide range of angle positions. It has been found that the hinging trickle irrigation spikes according to the invention make automated assembly of the capillary line possible.

The hinged joint between the first part and the second part can comprise any structure known in the prior art. Preferably, however, the first part is provided with an insertion opening close to the hinge point, for receiving the second part. A pin extends in the insertion opening and the second part is provided with snap-fit tabs, which engage about the pin and thus provide a hinged joint.

The deflector which functions to guide water droplets issuing from the outflow opening over the first part is preferably located in the first part, close to the joint with the second part.

As indicated above, the proposed device can be produced relatively simply. A method for production by injection moulding comprises the production of the first and the second part in one step, the parts being arranged relative to one another turned through 90° with respect to the final position and being joined to one another via runners.

The invention also relates to the assembly described above, consisting of a main line, a number of capillary lines branching therefrom, and devices, as described above, fitted on the capillary lines.

The invention will be explained in more detail below with reference to an illustrative embodiment shown in the drawing. In the drawing:
Fig. 1 shows, diagrammatically, the use of trickle irrigation spikes in combination with the feed lines used, for supplying a crop with moisture;
Fig. 2 shows, diagrammatically, the trickle irrigation spike according to the invention in a side view and partially in cross-section;
Fig. 3 shows a perspective view, partially in cross-section, of the trickle irrigation spike viewed from another direction;
Fig. 4 shows a further view/cross-section of the trickle irrigation spike according to the invention; and
Fig. 5 shows the trickle irrigation spike according to the invention in the right-angled position; and
Fig. 6 shows the moulding as obtained after injection moulding of the trickle device according to the previous figures.

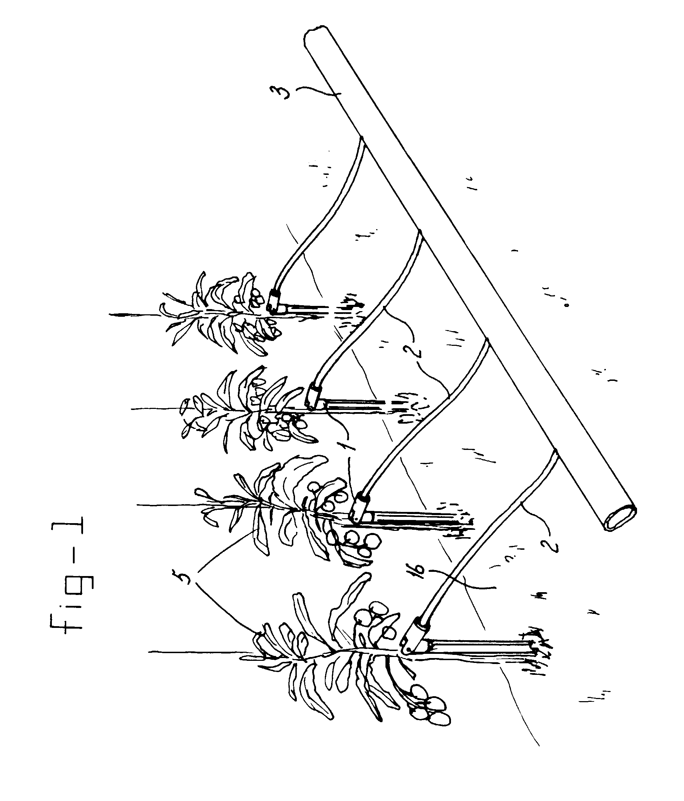

Fig. 1 shows, highly diagrammatically, a number of trickle irrigation spikes according to the invention, each of which is connected to a capillary line 2, which, in turn, is connected to a main line 3. A connection of this type is produced by making openings in the main line by punching and inserting capillary line in the openings. The trickle irrigation spikes are placed in a substrate on which a crop 5 is being cultivated. The volume of liquid supplied to the trickle irrigation spikes can be determined by appropriate sizing of the capillary lines 2. If, for example, a pressure of 1 bar prevails in the main line 3, the volume of water dispensed per hour will be, for example, 1 to 10 litres, depending on the capillary, such as between 0.4 and 1 mm.

Capillary lines of this type can be produced, for example, by means of extrusion.

The use of trickle irrigation spikes is generally known. However, the known spikes are straight, that is to say line 2 extends as a continuation of such a spike.

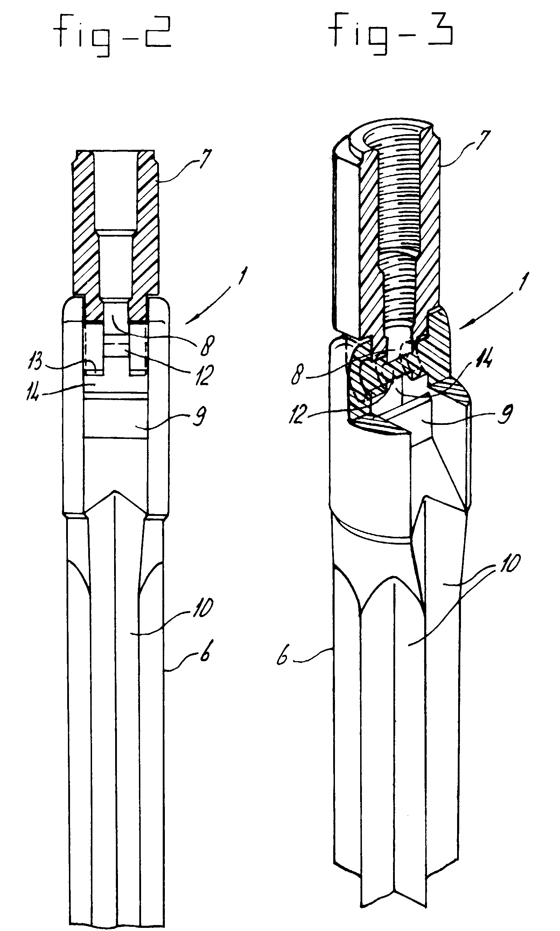

Figs. 2-6 show details of the trickle irrigation spike according to the invention.

Fig. 2 shows a side view of a trickle irrigation spike indicated by 1. The spike consists of a first or lower part 6 and a second or upper part 7. Said parts are hingeably connected to one another, as can be seen from Fig. 3. The first part 6 is provided with an insertion opening 14 for receiving the free end of the second part 7. A hinge pin 12 extends across said opening. The second part 7 is provided close to the free end with resilient tabs 13, which are provided with a recess for accommodating hinge pin 12 with a snap fit.

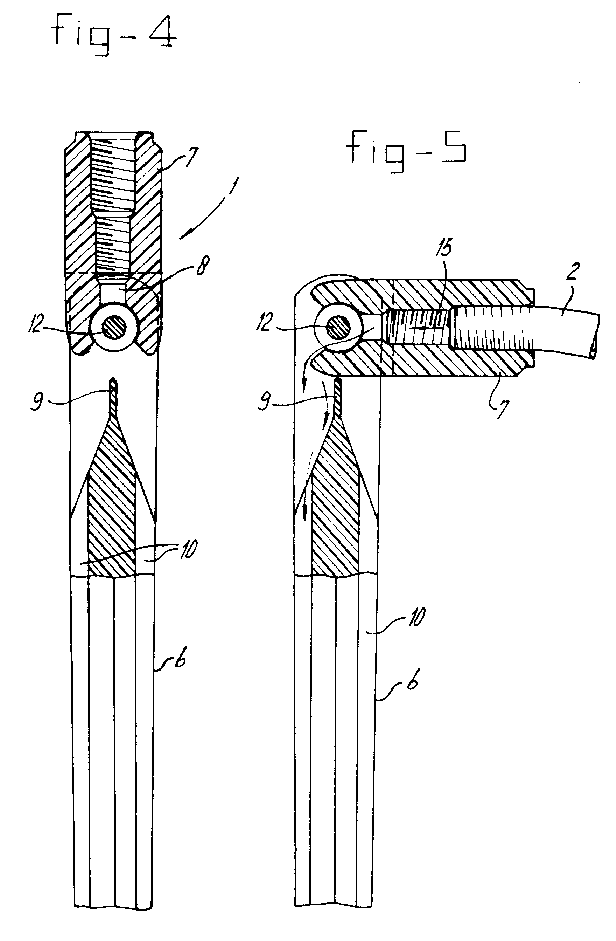

As can be seen from the figures, the second part is provided with a screw thread so as to take a capillary line 2. Two sections of screw thread of different diameter are shown, to be able to take lines of different diameters. Such a screw thread can, for example, be produced as a double thread with a pitch of about 4 mm. Liquid issuing therefrom flows, as shown in Fig. 5, in the direction of arrow 15 to outflow opening 8 of the second part 7. The liquid then moves over deflector 9 and through grooves 10 to the substrate.

It can be seen from Fig. 5 that the second part 7 can be hinged to an angle of about 90° with respect to the first part 6. Of course, any angle position between + and -90° with respect to the straight position shown in Figs 2-4 is possible.

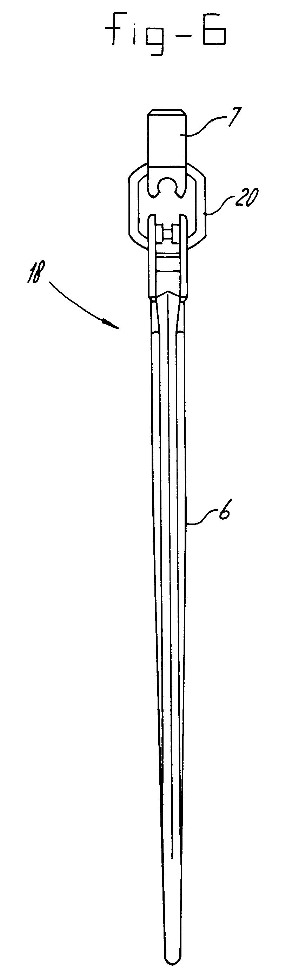

Fig. 6 shows a moulding obtained after injection moulding. This moulding consists of the first part 6 and second part 7, which are joined by a runner 20. After breaking runner 20, part 7 must be turned through 90° with respect to part 6 and the two parts must then be snapped onto one another. This can take place in the factory. The following operations can be carried out in the same factory or at the place of use: cutting lines 2 to the appropriate length, joining to main line 3 or connecting to the latter at the place of use, and packing to form a roll. In the greenhouse or other place of use, all that is then needed is to unwind the roll and to position the various parts. Any plastic material known from the prior art, in any (or different) colours, can be used for the spikes.

Although the invention has been described above with reference to a preferred embodiment, it must be understood that numerous modifications can be made thereto without going beyond the scope of the present claims. Variants of the first and second parts will be immediately apparent to a person skilled in the art after reading the above.

## Claims

1. Device (1) for dispensing a liquid to a crop (5), comprising a spike-shaped body provided with a first part (6), which has to be introduced into the substrate in which/on which the crop is cultivated, and a second part (7) provided with a fixing for a feed hose (2) for said liquid to be dispensed, wherein an outflow opening is arranged between said first and second parts and the first part is provided with means for guiding fluid issuing from said outflow opening to the substrate, characterised in that the first and the second parts are hingeably joined to one another and in that the outflow opening (8) is located in the second part close to the hinge point.

2. Device according to Claim 1, wherein the first part is provided, close to the hinge point, with an insertion opening (14) for receiving the second part.

3. Device according to one of the preceding claims, wherein said insertion opening is provided with hinge means.

4. Device according to Claim 3, wherein said hinge means comprise a pin (12) extending across said opening.

5. Device according to one of the preceding claims, wherein the free end of the second part located close to the outflow opening (8) is provided with hinge means.

6. Device according to Claim 5, wherein said hinge means comprise snap-fit means (13).

7. Device according to one of the preceding claims, wherein the first part is provided with a deflector (9) close to the joint with the second part.

8. Moulding for the production of a device according to one of the preceding claims, wherein the first part and the second part are joined via a runner (20) which is to be broken.

9. Moulding according to Claim 8, wherein the first part and the second part are arranged essentially turned through 90° with respect to one another.

10. Watering assembly comprising a main line (3), a number of capillary lines (2) branching therefrom and devices according to one of Claims 1-7 fitted on said capillary lines.
